Europäisches Patentamt

European Patent Office

Office européen des brevets

(19)

(11) Numéro de publication: **0 260 175**
**B1**

(12) # FASCICULE DE BREVET EUROPEEN

(45) Date de publication du fascicule du brevet:
**07.02.90**

(51) Int. Cl.⁴: **F01D 5/14**, F04D 29/38

(21) Numéro de dépôt: **87401877.3**

(22) Date de dépôt: **12.08.87**

(54) **Pale profilée d'hélice et son application aux motoventilateurs.**

(30) Priorité: **12.09.86 FR 8612811**

(43) Date de publication de la demande:
**16.03.88 Bulletin 88/11**

(45) Mention de la délivrance du brevet:
**07.02.90 Bulletin 90/6**

(84) Etats contractants désignés:
**DE ES GB IT SE**

(56) Documents cités:
**DE-A- 1 903 642**
**FR-A- 2 459 387**
**GB-A- 2 151 310**
**US-A- 2 095 162**
**US-A- 4 569 631**

(73) Titulaire: **ECIA - EQUIPEMENTS ET COMPOSANTS POUR L'INDUSTRIE AUTOMOBILE, F-25400 Audincourt (Doubs)(FR)**

(72) Inventeur: **Vera, Jean-Claude, 8 rue de la Libération, F-25700 Valentigney(FR)**

(74) Mandataire: **Moncheny, Michel et al, c/o Cabinet Lavoix 2 Place d'Estienne d'Orves, F-75441 Paris Cedex 09(FR)**

ACTORUM AG

**Description**

La présente invention concerne les pales d'hélice et, plus particulièrement, une pale profilée d'hélice pour motoventilateur notamment pour véhicules automobiles.

L'invention vise à améliorer les performances aérauliques, à augmenter le rendement statique et accroître les capacités dynamiques de brassage de l'air des hélices plus spécialement axiales. L'invention s'applique plus particulièrement aux motoventilateurs qui équipent les groupes de refroidissement ou de climatisation des véhicules automobiles.

L'invention concerne plus particulièrement les pales des hélices destinées à être placées en amont, par rapport au sens de l'écoulement du fluide, des ensembles à refroidir tels que des échangeurs de chaleur, par exemple des radiateurs ou des condenseurs, au travers desquels les hélices forcent le fluide, notamment de l'air, et où ces ensembles à refroidir sont situés dans le souffle de l'hélice.

A débit donné, pour augmenter la puissance calorifique extraite d'un ensemble à refroidir tel qu'un condenseur ou un radiateur de véhicule, il faut que le flux d'air généré par l'hélice diffuse sur la plus grande surface possible en assurant simultanément un brassage turbulent de l'air sans accroître de manière notable la perte de pression totale en aval du bord de fuite des pales d'hélice.

Le document FR-A 2 459 387 décrit un ventilateur dont les pales présentent un profil en S retourné mais ne concerne pas le même problème.

Pour parvenir à ceci, suivant l'invention, on fait en sorte que les filets d'air situés dans les couches proches du centre de l'hélice décrivent des trajectoires centripètes tandis que ceux situés dans les couches proches de sa périphérie suivent des trajectoires centrifuges. De cette manière, à l'aplomb de l'intrados et de l'extrados de chaque pale, ce phénomène aérodynamique provoque le glissement des couches limites par rupture de l'équilibre radial des lignes de courant pariétales pour les sections de pale de l'hélice situées à proximité du centre et de la périphérie et ce déplacement des couches limites se fait en évitant de provoquer le décollement de l'air sur l'extrados des sections intéressées.

L'invention vise à atteindre ce but sans pour autant se heurter aux difficultés énoncées grâce à une pale spécialement profilée.

Une pale profilée pour hélice suivant l'invention est d'un type qui présente les propriétés énoncées dans le préambule de la revendication principale et qui possède les particularités exposées dans la partie caractérisante de cette dernière et des revendications qui s'y rattachent.

D'autres caractéristiques de l'invention ressortiront de la lecture de la description qui suit et de l'examen du dessin donné, seulement à titre d'exemple, où :

- la Fig.1 est un schéma d'une pale d'hélice suivant l'invention, et
- la Fig.2 est un graphique illustrant la manière dont le point de raccordement est déterminé.

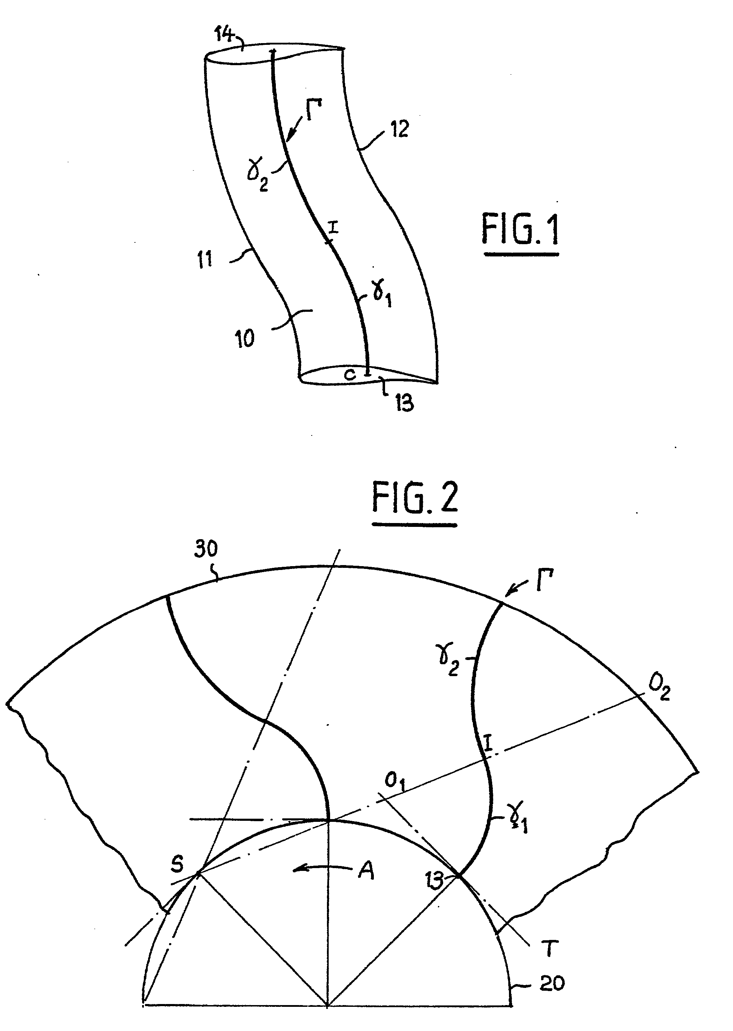

Sur la Fig.1, on a dessiné une pale 10 d'hélice suivant l'invention. Comme on le voit, cette pale d'hélice présente un bord d'attaque 11 et un bord de fuite 12 ainsi qu'un pied 13 et une tête 14. Cette pale possède une section droite avec un profil dont les lieux $\Gamma$ des centres de poussée C présente un point I de raccordement par exemple un point d'inflexion ou un point anguleux. Comme on le voit, cette pale d'hélice comprend entre son pied 13 et sa tête 14 un arc abyssal $\gamma_1$ dont la concavité est tournée vers l'amont, c'est-à-dire le bord d'attaque, et un arc sommital dont la concavité est dirigée vers l'aval, c'est-à-dire le bord de fuite. Ces arcs sont des arcs de coniques ou de cercles.

La Fig.2 permet de mieux comprendre la manière dont le point de raccordement I sur le lieu des centres de pousée C des profils de section de pale est déterminé et la manière dont les rayons de courbure et les centres de courbure des arcs abyssaux et sommitaux sont établis. On a dessiné schématiquement un moyeu 20 d'une hélice à huit pales qui est destinée à tourner dans le sens repéré par une flèche A. On trace la tangente T au cercle de pied, confondu ici par commodité avec le moyeu, de la pale de rang un et on trace la sécante S qui relie les pieds des deux pales situées en amont, de rang deux et trois. Cette droite des pieds S coupe la tangente T en un premier point $O_1$ et le cercle de tête 30 de la pale en un deuxième point $O_2$. Ces deux points sont les centres de courbure des arcs abyssaux $\gamma_1$ et sommitaux $\gamma_2$, respectivement. Le rayon de courbure de l'arc abyssal $\gamma_1$ est égal à la distance qui sépare le premier point d'intersection $O_1$ du pied 13 de la première pale. L'intersection de cet arc de cercle avec la droite des pieds S est le point de raccordement I et la distance qui sépare ce point de raccordement I de l'intersection de la droite des pieds S avec le cercle de tête, fixe le rayon de courbure de l'arc sommital $\gamma_2$.

Le dessin de la Fig.2 illustre la manière que l'on vient d'indiquer pour construire le lieu des centres de poussée C des profils des sections de pale selon l'invention.

Dans le mode de réalisation illustré sur les Fig.1 et 2, les arcs abyssaux et sommitaux ont une tangente commune au point de raccordement I. Si nécessaire, à la place d'un tel point d'inflexion on peut avoir un point anguleux au raccordement de ces deux arcs ; il suffit que l'un des deux centres de courbure de ces arcs soit situé en dehors de la droite des pieds.

On observera aussi qui si besoin est les bords d'attaque et de fuite présentent aussi des points d'inflexion ou anguleux comme la courbe .

Dans ce qui précède on a décrit un mode de réalisation d'une hélice qui comprend huit pales conformes à l'invention dont les arcs abyssaux et sommitaux sont des portions de cercle. Il doit être clair qu'une telle hélice peut comprendre un nombre différent de pales et que ces arcs abyssaux et sommitaux peuvent être des coniques autres que des cercles, par exemple des ellipses.

Lorsqu'on utilise un ventilateur équipé d'une hélice dont les pales sont conformes à l'invention, on obtient des gains notables. Un motoventilateur équipé d'un hélice à pales traditionnelles dont le diamètre extérieur est de 305 mm environ et qui assure un débit d'air de 1600 m³/h sous une pression moyenne de 14 mm d'eau a un rendement statique global d'environ 26 % et consomme 240 W. Un ventilateur équipé d'une hélice de même dimension dont les pales sont cette fois configurées conformément à l'invention permet de faire passer, dans les mêmes conditions, ce rendement à un peu plus de 34 % pour une puissance absorbée qui n'est plus que de 193 W.

Grâce aux pales d'hélice suivant l'invention, il est possible de réduire notablement la consommation énergétique tout en amèliorant le rendement.

Les pales pour hélice selon l'invention conviennent bien aux application automobiles, par exemple des ventilateurs qui sont montés dans un carénage fixe qui s'étend jusqu'à l'élément à refroidir pour éviter toute recirculation d'air entre les côtés haute et basse pressions qui entourent le ventilateur.

Il est clair que d'autres applications sont possibles en dehors du secteur de l'automobile que l'on a indiqué seulement à titre d'exemple.

## Revendications

1. Hélice notamment de ventilateur avec au moins trois pales dont l'axe (Γ) qui est le lieu des centres de poussée d'une pale présente un point de raccordement (I) entre le pied (13) et le sommet (14) de ladite pale qui sépare un arc abyssal (γ1) s'étendant du point de raccordement (I) au pied (13) de la pale et un arc sommital (γ2) s'étendant de ce point de raccordement (I) au sommet (14) de la pale, cet arc abyssal (γ1) étant concave vers l'amont alors que cet arc sommital (γ2) est concave vers l'aval, par rapport au sens de rotation de la pale, chacun de points (C) d'intersection des axes (Γ) de paie avec son pied de pale respectif étant situé sur un cercle de pied (20), des points d'intersection (C) consécutifs définissant une droite (S) et en chaqun desdits points d'intersection (C) étant définie une tangente (T) audit cercle de pied (20), caractérisée en ce que pour une pale donnée le centre de courbure (O₁) de l'arc abyssal (γ1) est déterminé par l'intersection de la tangente correspondante (T) au cercle de pied (13) de pale avec la droite (S) qui joint les deux points d'intersection (C) consécutifs situés immédiatement en amont de ladite pale donnée dans le sens de rotation et en ce que le rayon de courbure de cet arc abyssal (γ1) est égal à la distance qui sépare ledit centre de courbure du point de raccordement (I) de ladite pale donnée.

2. Pale conforme à la revendication 1, caractérisée en ce que l'arc sommital (γ2) présente un centre de courbure (O₂) déterminé par l'intersection de la droite (S) qui joint les pieds des pales situées immédiatement en amont avec le cercle de tête (30) et en ce que le rayon de courbure de cet arc sommital (γ2) est égal à la distance qui sépare le point de raccordement (I) de l'intersection (O₂) de la droite des pieds (2) avec le cercle de tête (30).

3. Pale selon l'une quelconque des revendications 1 et 2, caractérisée en ce que ce point de raccordement (I) est un point d'inflexion.

4. Pale selon l'une quelconque des revendications 1 et 2, caractérisée en ce que ce point de raccordement (I) est un point anguleux.

5. Pale selon l'une quelconque des revendications 1 à 4, caractérisée en ce que ces arcs abyssal (γ1) et sommital (γ2) sont des portions de coniques.

6. Pale selon l'une quelconque des revendications 1 à 5, caractérisée en ce que ces arcs abyssal (γ1) et sommital (γ2) sont des portions de cercles.

7. Application d'une pale selon l'une quelconque des revendications 1 à 6 à la construction d'hélice de motoventilateurs notamment à usage automobile.

## Claims

1. A propeller, in particular of a fan with at least three blades whose axis Γ which is the locus of the thrust centres of a blade, has a connecting point I between the foot (13) and the top (14) of the said blade which separates an abyssal arc (γ1) extending from the connecting point (I) to the foot (13) of the blade and a summit arc (γ2) extending from this connecting point (I) to the top (14) of the blade, this abyssal arc (γ1) being concave in the upstream direction whilst this summit arc (γ2) is concave in the downstream direction relative to the direction of rotation of the blade, each of the intersection points (C) of the blade axes (G) with its respective bladefoot being situated on a foot circle (20), consecutive intersecting points (C) defining a straight line (S) and a tangent (T) to the said foot circle (20) being defined at each one of the said intersecting points (C), characterized in that for a given blade, the centre of curvature (O₁) of the abyssal arc (γ1) is determined by the intersection of the corresponding tangent (T) at the circle of the blade foot (13) with the straight line (S) joining the two consecutive intersecting points (C) situated directly upstream of the said given blade in the direction of rotation, and in that the radius of curvature of this abyssal arc (γ1) is equal to the distance separating the said centre of curvature from the connecting point (I) of the said given blade.

2. A blade according to claim 1, characterized in that the summit arc (γ2) has a centre of curvature (O₂) determined by the intersection of the straight line (S) joining the feet of the blades situated directly upstream with the head circle (30), and in that the radius of curvature of this summit arc (γ2) is equal to the distance separating the connecting point (I) from the intersection (O₂) of the straight line (S) of the feet with the head circle (30).

3. A blade according to claim 1 or 2, characterized in that this connecting point (I) is a point of inflection.

4. A blade according to claim 1 or 2, characterized in that this connecting point (I) is an angular point.

5. A blade according to any one of claims 1 to 4, characterized in that this abyssal arc (γ1) and summit arc (γ2) are portions of cones.

6. A blade according to any one of claims 1 to 5, characterized in that this abyssal arc (γ1) and summit arc (γ2) are portions of circles.

7. An application of a blade according to any one of claims 1 to 6 to the construction of the propellers of motor driven fans, in particular for use in motor vehicles.

**Patentansprüche**

1. Propeller, insbesondere für Ventilatoren, mit mindestens drei Flügeln, deren Achse ($\Gamma$), die der geometrische Ort aller Antriebsmittelpunkte eines Flügels ist, einen Verbindungspunkt (I) zwischen dem Fuß (13) und der Spitze (14) des Flügels besitzt, der einen Fußbogen ($\gamma_1$), der sich von dem Verbindungspunkt (I) zum Fuß (13) des Flügels erstreckt, von einem Spitzenbogen ($\gamma_2$) trennt, der sich von diesem Verbindungspunkt (I) zur Spitze (14) des Flügels erstreckt, wobei der Fußbogen ($\gamma_1$) bezüglich der Drehrichtung des Flügels auf die Vorderkante zu konkav ist, während der Spitzenbogen ($\gamma_2$) auf die Hinterkante zu konkav ist, jeder der Punkte (C), in denen sich die Flügelachsen ($\Gamma$) mit dem jeweiligen Flügelfuß schneiden, auf einem Fußkreis (20) liegen, durch aufeinanderfolgende Schnittpunkte (C) eine Gerade (S) und durch jeden Schnittpunkt (C) eine Tangente (T) des Fußkreises (20) gelegt ist, dadurch gekennzeichnet, daß bei einem gegebenen Flügel der Krümmungsmittelpunkt ($O_1$) des Fußbogens ($\gamma_1$) durch den Schnittpunkt der entsprechenden Tangente (T) des Fußkreises (13) des Flügels und der Geraden (S) bestimmt ist, die die beiden aufeinanderfolgenden Schnittpunkte (C) miteinander verbindet, die in Drehrichtung unmittelbar vor diesem bestimmten Flügel gelegen sind, und daß der Krümmungsradius des Fußbogens ($\gamma_1$) gleich dem Abstand dieses Krümmungsmittelpunktes von dem Verbindungspunkt (I) dieses bestimmten Flügels ist.

2. Flügel nach Anspruch 1, dadurch gekennzeichnet, daß der Krümmungsmittelpunkt ($O_2$) des Spitzenbogens ($\gamma_2$) durch den Schnittpunkt der Geraden (S), die die Füße der unmittelbar davor gelegenen Flügel miteinander verbindet, und des Kopfkreises (30) bestimmt ist und daß der Krümmungsradius des Spitzenbogens ($\gamma_2$) gleich dem Abstand des Verbindungspunktes (I) von dem Schnittpunkt ($O_2$) der Geraden (S) und des Kopfkreises (30) ist.

3. Flügel nach Anspruch 1 oder 2, dadurch gekennzeichnet, daß der Verbindungspunkt (I) ein Wendepunkt ist.

4. Flügel nach einem der Ansprüche 1 oder 2, dadurch gekennzeichnet, daß der Verbindungspunkt (I) ein Winkelübergangspunkt ist.

5. Flügel nach einem der vorhergehenden Ansprüche, dadurch gekennzeichnet, daß der Fußbogen ($\gamma_1$) und der Spitzenbogen ($\gamma_2$) Kegelschnittbögen sind.

6. Flügel nach einem der Ansprüche 1 bis 5, dadurch gekennzeichnet, daß der Fußbogen ($\gamma_1$) und der Spitzenbogen ($\gamma_2$) Kreisbögen sind.

7. Anwendung eines Flügels gemäß einem der vorhergehenden Ansprüche für den Bau von Motorventilatorpropellern insbesondere für Kraftfahrzeuge.

EP 0 260 175 B1

FIG.1

FIG.2